# EUROPEAN PATENT APPLICATION

(11) **EP 2 204 955 A1**
(43) Date of publication of application: **07.07.2010**
(21) Application number: 09824351.2
(22) Date of filing: 24.04.2009
(51) Int. Cl.: H04L 12/58

(54) **METHOD, APPARATUS AND SYSTEM FOR MESSAGE IDENTIFICATION**

(30) Priority: 06.11.2008 CN 200810226093
(71) Applicant: Huawei Technologies Co., Ltd., Shenzhen, Guangdong 518129 (CN)
(72) Inventor: PENG, Zhiwei, Shenzhen Guangdong 518129 (CN)
(74) Representative: Thun, Clemens
(86) International application number: PCT/CN2009/071458
(87) International publication number: WO 2010/051694

(57) **Abstract**

A method, a device, and a system for message identification are provided. The method for message identification includes: receiving an MO message carrying a calling identifier and a calling party address; obtaining a VMSC address of a subscriber corresponding to the calling identifier; and determining whether the calling party address is consistent with the obtained VMSC address or not, and if not, the MO message is a spoof message. Another method includes: receiving an MT message carrying a called identifier, a calling party address, and an SM-RP-OA; obtaining a calling party address carried an SRI message associated with the MT message from the SRI message according to the called identifier; and determining whether the SM-RP-OA in the MT message is consistent with the calling party address in the MT message or not and whether the calling party address in the MT message is consistent with the calling party address in the SRI message or not, and if at least one of the two situations is inconsistent, the MT message is a fake message. The device and the system are a device and a system corresponding to the method for message identification, which are capable of realizing effective identification of message spoofing behaviors.

## Description

### FIELD OF THE TECHNOLOGY

The present invention relates to the field of communication technology, and more particularly to a method, a device, and a system for message identification.

### BACKGROUND

Currently, in the field of communication technology, as for network operators of global system for mobile communications (GSM) and wideband code division multiple access (WCDMA) networks, the international short-message interworking service is accomplished through an international signalling system No.7 (SS7). In a hierarchical structure of the SS7 signalling protocol stack, a signalling connection control part (SCCP), a transaction capabilities application part (TCAP), and a mobile application part (MAP) are associated with the short message applications. A calling identifier and a called identifier carried in a short message are terminal user number information of the MAP layer. A source address (i.e. a calling party address) and a destination address (i.e. a called party address) are network equipment address information of the SCCP layer.

However, increasingly severe message spoofing problem occurs to the international and internetwork short message services of networks including GSM, WCDMA, and other networks. A forger accesses through certain unsafe network, forges a short message signalling message, and sends it to a mobile network. Nowadays, in the existing communication networks, the following two types of short message spoofing behaviors mainly exist.

One type is message spoofing of short message service mobile originated (SMS MO). A normal MO message is an upstream process of a short message, that is, a sender submits the MO message to a mobile switching center (MSC) which the sender belongs to. The MSC then submits the MO message to a short message service center (SMSC). In a spoofing situation of an MO message, a sender at a third party network or a non-mobile network pretends to be a subscriber terminal or an MSC, and sends an MO message to an SMSC of a mobile network A, in which a sender number and a receiver number of the MO message are both filled with numbers of valid subscribers in the mobile network A. However, a calling party address of the MO message is usually forged. For example, the calling party address is filled with an MSC address of certain mobile network B. At this time, after the MO message sent to the SMSC of the mobile network A is sent to a subscriber terminal in this mobile network A, the SMSC returns a response message of the MO message to the MSC of the mobile network B, and thus the SMSC in the mobile network A is spoofed.

The other type is a message faking of a short message service mobile terminated (SMS MT). A normal MT message is a downstream process of a short message, that is, a process that an SMSC delivers a short message to a receiver terminal. Generally, the SMSC firstly sends a SendRoutingInfoForSM (SRI) message to a home location register (HLR) of a called subscriber to query a visited MSC (VMSC) address of the called subscriber. After obtaining a query result, the SMSC directly delivers an MT message to the VMSC. Then, the VMSC sends the MT message to a receiver. In the situation of faking an MT message, a sender at a third party network or a non-mobile network pretends to be an SMSC in a mobile network A, and directly sends one MT message to an MSC in a mobile network B, in which a sender number of the MT message is a subscriber number really existed in the mobile network B or an invalid number, and a receiver number is a number of a valid subscriber in the mobile network B. However, a sender address of the SCCP layer and/or an SMSC address of the MAP layer are usually forged. At this time, a calling party address in the SRI message sent by the SMSC is real, thereby ensuring that a VMSC address of the called subscriber is obtained. Once a VMSC in the mobile network B receives the MT message, the VMSC returns a response message of the MT message to the SMSC in the mobile network A, and thus the faking problem occurs to the mobile network B.

When implementing the present invention, the inventor(s) finds that such kinds of spoofing cannot be effectively identified in the prior art, thereby causing an incorrect charging of a valid subscriber in a mobile network and problems in the internetwork settlement among operators, which results in low network reliability and security.

### SUMMARY

Accordingly, the present invention is directed to a method, a device, and a system for message identification, which are applicable to realize effective identification of message spoofing behaviors, thereby increasing network reliability and security.

In an embodiment, the present invention provides a method for message identification, including:
receiving a mobile originated (MO) message, wherein the MO message carries a calling identifier and a calling party address;
obtaining a visited mobile switching center (VMSC) address of a subscriber corresponding to the calling identifier; and
determining whether the calling party address is consistent with the obtained VMSC address or not, wherein if the calling party address is not consistent with the obtained VMSC address, the MO message is a spoof message.

In another embodiment, the present invention provides a device for message identification, including:
a signalling-transfer-interface unit, adapted to receive a mobile originated (MO) message, wherein the MO message carries a calling identifier and a calling party address;
an obtaining unit, adapted to obtain a visited mobile switching center (VMSC) address of a subscriber corresponding to the calling identifier; and
a check unit, adapted to determine whether the calling party address is consistent with the obtained VMSC address or not, wherein if the calling party address is not consistent with the obtained VMSC address, the MO message is a spoof message.

In another embodiment, the present invention provides a system for message identification, including:
a signalling check point, adapted to receive a mobile originated (MO) message carrying a calling identifier and a calling party address, obtain a visited mobile switching center (VMSC) address of a subscriber corresponding to the calling identifier, and determine whether the calling party address is consistent with the obtained VMSC address or not, wherein if the calling party address is not consistent with the obtained VMSC address, the MO message is a spoof message; and
a signalling transfer point (STP), connected to the signalling check point, and adapted to route the MO message to the signalling check point, and forward a message to be processed by the signalling check point.

In another embodiment, the present invention provides a method for message identification, including:
receiving a mobile terminated (MT) message, wherein the MT message carries a called identifier, a calling party address, and a short message relay protocol origination address (SM-RP-OA);
obtaining a calling party address carried in a SendRoutingInfoForSM (SRI) message from the SRI message associated with the MT message according to the called identifier; and
determining whether the SM-RP-OA carried in the MT message is consistent with the calling party address carried in the MT message or not and whether the calling party address carried in the MT message is consistent with the calling party address carried in the SRI message or not, wherein if at least one of the two situations is inconsistent, the MT message is a fake message.

In another embodiment, the present invention provides a device for message identification, including:
a signalling-transfer-interface unit, adapted to receive a mobile terminated (MT) message, wherein the MT message carries a called identifier, a calling party address, and a short message relay protocol origination address (SM-RP-OA);
a first obtaining unit, adapted to obtain a calling party address carried in a SendRoutingInfoForSM (SRI) message from the SRI message associated with the MT message according to the called identifier; and
a first check unit, adapted to determine whether the SM-RP-OA carried in the MT message is consistent with the calling party address carried in the MT message or not and whether the calling party address carried in the MT message is consistent with the calling party address carried in the SRI message or not, wherein if at least one of the two situations is inconsistent, the MT message is a fake message.

In another embodiment, the present invention provides a system for message identification, including:
a signalling check point, adapted to receive a mobile terminated (MT) message carrying a called identifier, a calling party address, and a short message relay protocol origination address (SM-RP-OA), obtain a calling party address carried in a SendRoutingInfoForSM (SRI) message from the SRI message associated with the MT message according to the called identifier, and determine whether the SM-RP-OA carried in the MT message is consistent with the calling party address carried in the MT message or not and whether the calling party address carried in the MT message is consistent with the calling party address carried in the SRI message or not, wherein if at least one of the two situations is inconsistent, the MT message is a fake message; and
a signalling transfer point (STP), connected to the signalling check point, adapted to route the MT message to the signalling check point, and forward a message to be processed by the signalling check point.

As known from the above technical solutions, the method, device, and system for message identification in embodiments of the present invention provide a manner for checking short messages, in which a check unit or a signalling check point is configured to perform an address check on short messages sent from a sender to identify spoofing behaviors and prevent the delivery of spoof messages. Therefore, the problems caused by the ineffective prevention of spoofing in the prior art, including that the expenses for sending spoof messages are mistakenly charged on valid subscribers and error occurs to the internetwork settlement among operators, can be avoided, thereby enhancing the reliability and security of communication networks.

### BRIEF DESCRIPTION OF THE DRAWINGS

FIG. 1 is a schematic view of a networking logic structure according to an embodiment of the present invention;

FIG. 2 is a flow chart of a method for message identification according to an embodiment of the present invention;

FIG. 3 is a signalling flow chart of a method for message identification according to an embodiment of the present invention;

FIG. 4 is a flow chart of a method for message identification according to an embodiment of the present invention;

FIG. 5 is a signalling flow chart of a method for message identification according to an embodiment of the present invention;

FIG. 6 is a schematic structural view of a device for message identification according to an embodiment of the present invention;

FIG. 7 is a schematic structural view of a device for message identification according to an embodiment of the present invention;

FIG. 8 is a schematic structural view of a system for message identification according to an embodiment of the present invention; and

FIG. 9 is a schematic structural view of a system for message identification according to an embodiment of the present invention.

### DETAILED DESCRIPTION

The technical solutions in the embodiments of the present invention are described below clearly and completely with reference to the accompany drawings in the embodiments of the present invention. Apparently, the described embodiments are merely a part rather than all embodiments of the present invention. All the other embodiments achieved by those of ordinary skill in the art without creative work fall within the protection scope of the present invention based on the embodiments in the present invention.

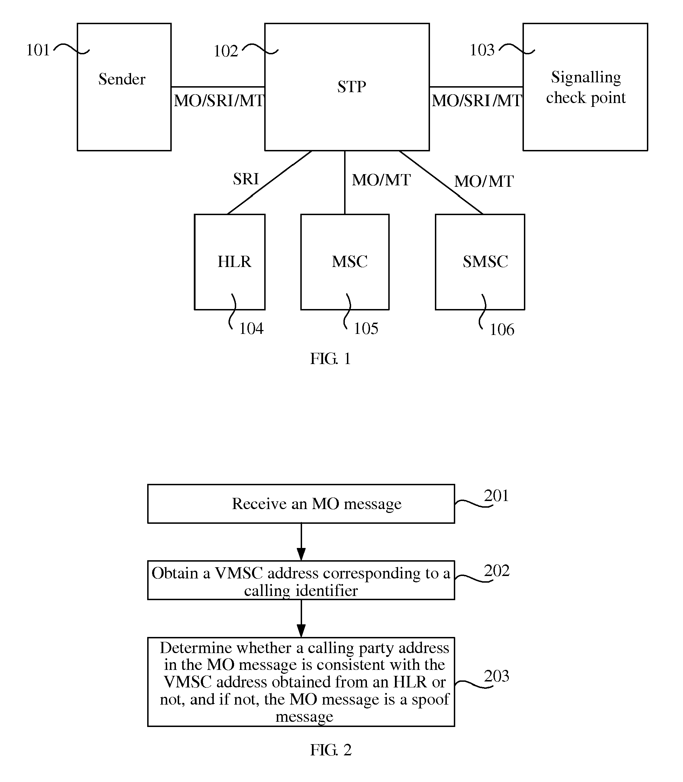

FIG. 1 is a schematic view of a networking logic structure according to an embodiment of the present invention. As shown in FIG. 1, a signalling check point 103 is newly added in the networking logic structure to establish a link with a signalling transfer point (STP) 102. The STP 102, the signalling check point 103, a home location register (HLR) 104, a mobile switching center (MSC) 105, and a short message service center (SMSC) 106 are network equipments associated with the short message checking process in the same network.

When identifying the spoofing situation of a mobile originated (MO) message, the STP 102 routes an MO message of a sender 101 to the signalling check point 103. The signalling check point 103 checks and analyzes the MO message. If the MO message is determined to be a spoof message through checking and analyzing, the MO message is prevented from being delivered. If the MO message is a valid message, an MO message response is returned to the sender 101 by the signalling check point 103. The sender 101 of the MO message is usually an MSC in an internal network or an MSC in an external network, and a receiver is the SMSC 106. When identifying the situation of faking a mobile terminated (MT) message, the STP 102 forwards an MT message of the sender 101 to the signalling check point 103. The signalling check point 103 checks and analyzes the MT message. If the MT message is determined to be a fake message through checking and analyzing, the MT message is prevented from being delivered. If the MT message is a valid message, an MT message response is also returned to the sender 101 by the signalling check point 103. When identifying the situation of faking the MT message, before the STP 102 forwards the MT message to the signalling check point 103, the signalling check point 103 further checks and analyzes a SendRoutingInfoForSM (SRI) message routed to the signalling check point 103 by the STP 102. The sender 101 of the MT message is usually an SMSC in an internal network or an SMSC in an external network, and a receiver is the MSC 105.

In an embodiment of the present invention, in order to solve the spoofing problem about the MO message and the faking problem about the MT message, the STP 102 mainly employs two routing rules to accomplish the routing of the received MO message and the SRI message to the signalling check point 103. However, the routing rules thereof are not limited to such two routing rules. That is to say, any routing rule may be employed as long as a certain routing rule is set in order to check some messages.

In the routing rule 1, the routing is performed according to a called party address. All messages with a called party address being an address of the SMSC 106 are routed to the signalling check point 103 by the STP 102. The signalling check point 103 selects to check and analyze MO messages only, and performs a transparent transmission on the other messages with a called party address being the address of the SMSC 106. Those messages with a called party address being the address of the SMSC 106 include MO messages, MT_ACK messages, SRI_FOR_SM_ACK messages, REPORT_SM DELIVERY_STATUS_ACK messages, ALERT_SC messages, and INFORM_SC messages, and the like.

In the routing rule 2, the routing is performed according to an operation code (opcode). In a hierarchical structure of an SS7 signalling stack, the opcode belongs to a mobile application part (MAP) layer. All messages with an opcode in the MAP layer being 45 are routed to the signalling check point 103 by the STP 102. That is to say, all the SRI messages are routed to the signalling check point 103.

As known from the above descriptions, as for the MT message, after receiving an SRI response message, an SMSC sends the MT message to a visited mobile switching center (VMSC) corresponding to a receiver according to a VMSC address carried in the SRI response message. After the signalling check point 103 checks and analyzes the SRI message, an address of the signalling check point 103 is carried in the SRI response message returned to a sender. Therefore, the MT message is normally forwarded to the signalling check point 103 by the STP 102.

In addition, according to the routing rule of the STP 102 employed in the embodiment of the present invention, all of MO messages, SRI messages, and MT messages sent by senders 101 in the internal network and the external network are sent to the signalling check point 103, which unavoidably increases the load of the signalling check point 103. However, in general, short message spoofing behavior rarely occurs in the same network. Thus, when those two routing rules mentioned above are configured for the STP 102, the STP 102 may select to only bind with messages sent from the sender 101 in the external network. That is to say, the routing rules only enable the messages entered from an external work to be routed to the signalling check point 103, and messages sent by the sender 101 in the internal network are not routed to the signalling check point 103. It should be noted that, such a binding manner only aims at decreasing the load of the signalling check point 103. If it needs to check the messages sent from the internal network, the STP 102 also routes the messages sent from the internal network to the signalling check point 103 for checking and analysis. In the embodiment of the present invention, the illustration is made by taking the situation of checking the messages sent from the external network by a local network subscriber as an example. For the messages sent from the internal network by the local network subscriber, similar processes may be performed.

FIG. 2 is a flow chart of a method for message identification according to an embodiment of the present invention. As shown in FIG. 2, this embodiment is directed to the spoofing situation of an MO message. The method for message identification includes the following steps.

In Step 201, an MO message is received.

The MO message received by a signalling check point carries a calling identifier and a calling party address. The calling identifier is adapted to uniquely identify a subscriber who initiates a call. For example, the unique identifier may be a calling number of an MAP layer. The calling party address is a calling party address of an SCCP layer. Generally, in a message spoofing behavior, a calling party address carried in an MO message is forged by a forger who sends the MO message.

In Step 202, a VMSC address of a subscriber corresponding to the calling identifier is obtained.

The signalling check point obtains the VMSC address of the subscriber corresponding to the calling identifier from an HLR in a local network.

In Step 203, it is determined whether the calling party address in the MO message is consistent with the VMSC address obtained from the HLR or not, and if not, the MO message is a spoof message.

Generally, the calling identifier in the MO message is real. For example, a calling number is a real number of a subscriber in the local network, and a VMSC address of the subscriber corresponding to the calling number may be obtained from the HLR according to the calling number. In this case, the signalling check point may check whether the MO message is a spoof message or not by determining whether the VMSC address is consistent with the calling party address in the MO message or not. If the MO message is a message forged by a forger, its calling party address is usually forged.

The method for message identification provided in this embodiment is mainly directed to identifying a spoofing situation of messages. Through checking an MO message by a signalling check point, an accurate identification of the spoof message is realized, thereby enhancing the reliability and security of network operation.

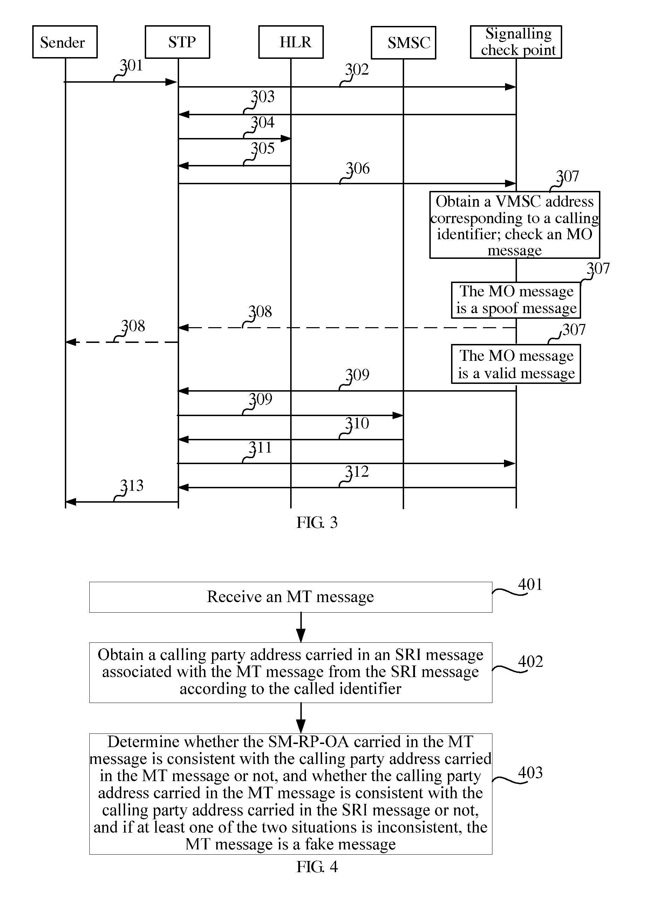

FIG. 3 is a signalling flow chart of a method for message identification according to an embodiment of the present invention. As shown in FIG. 3, based on the networking logic structure shown in FIG. 1, the flows of checking and sending an MO message are described in this embodiment in detail by taking a situation that a sender 101 pretends to be a local network subscriber to send an MO message from the external network as an example. The method for message identification includes the following steps.

In Step 301, a sender 101 sends an MO message to an STP 102.

The MO message carries a calling identifier, a called identifier, a calling party address, and a called party address. The called party address may be an address of an SMSC 106 in the internal network as shown in FIG. 1. As a unique identifier for a called subscriber, the called identifier may be, for example, a real mobile phone number of a uniquely identified subscriber. The calling identifier may be a real mobile phone number of another subscriber in the local network. The calling party address carried in the MO message is forged, which may be an address of an MSC in the external network. The real sender 101 may be located at a third party network or a non-mobile network.

In Step 302, after receiving messages with an address of an SMSC 106 as the called party address sent from the sender 101, the STP 102 routes the messages to a signalling check point 103. The signalling check point 103 identifies the MO message from the messages.

In Step 302 of this embodiment, all messages with the called party address being the address of the SMSC 106 are routed to the signalling check point 103 according to a destination address routing rule. The signalling check point 103 identifies the MO message from the messages.

In Steps 303-304, after the signalling check point 103 has identified the MO message from the messages routed by the STP 102, an SRI message is forwarded to an HLR 104 by the STP 102.

In Steps 305-306, after receiving the SRI message forwarded by the STP 102, the HLR 104 queries a VMSC address of a subscriber corresponding to the calling identifier. An SRI response message carrying the VMSC address of the subscriber corresponding to the calling identifier is forwarded to the signalling check point 103 by the STP 102.

In Step 307, the signalling check point 103 receives the SRI response message forwarded by the STP 102, and obtains the VMSC address of the subscriber corresponding to the calling identifier carried in the SRI response message. The signalling check point 103 further determines whether the VMSC address of the subscriber corresponding to the calling identifier is consistent with the calling party address carried in the MO message or not, so as to check the MO message. If they are inconsistent, it indicates that the sender 101 is a forger, and the calling party address carried in the MO message is forged. Thus, the MO message is identified as a spoof message, and Step 308 is performed. If they are consistent, it indicates that the sender 101 is a VMSC corresponding to a real subscriber, and the calling party address carried in the MO message is the VMSC address. The MO message is thus a valid message, and Step 309 is performed.

In Step 308, a failure response message is directly forwarded to the sender 101 by the STP 102, and the process is ended.

In Step 309, the signalling check point 103 modifies the calling party address carried in the MO message into an address of the signalling check point 103, and the MO message is sent to the SMSC 106 by the STP 102.

The modification of the calling party address carried in the MO message into the address of the signalling check point 103 aims at ensuring that, when the SMSC 106 returns an MO message response, the SMSC 106 sends the MO message response to the signalling check point 103.

In Steps 310-311, after receiving the MO message, the SMSC 106 returns the MO message response to the signalling check point 103 through the STP 102. At this time, the called party address of the MO message response is the address of the signalling check point 103.

In Steps 312-313, after receiving the MO message response forwarded by the STP 102, the signalling check point 103 modifies the called party address of the MO message response into the VMSC address, and sends the MO message response with the modified address to the VMSC, so as to inform the VMSC that the MO message sent by the VMSC has been delivered according to a normal short message processing procedure.

The method for message identification provided in this embodiment is mainly directed to identifying the spoofing situation. Through checking an MO message and modifying a calling party address or a called party address of the message by the signalling check point, an accurate identification of the spoof message is realized, thereby enhancing the security and reliability of network operation.

FIG. 4 is a flow chart of a method for message identification according to an embodiment of the present invention. As shown in FIG. 4, this embodiment is directed to the situation of faking an MT message. The method for message identification includes the following steps.

In Step 401, an MT message is received.

The MT message received by a signalling check point carries a called identifier, a calling party address, and a short message relay protocol origination address (SM-RP-OA). The called identifier is adapted to uniquely identify a called subscriber. For example, the unique identifier may be a called number of an MAP layer. The calling party address is a calling party address of an SCCP layer. For the MT message, the calling party address should be an SMSC address. In general message faking behaviors, a calling party address in an MT message is forged by a forger who sends the MT message.

In Step 402, a calling party address carried in an SRI message is obtained from the SRI message associated with the MT message, according to the called identifier.

Before sending the MT message, the SMSC first needs to obtain a VMSC address for receiving the MT message by sending the SRI message. Therefore, the calling party address carried in the SRI message is usually real, so that the calling party address in the SRI message may serve as one of the checking standards.

In Step 403, it is determined whether the SM-RP-OA carried in the MT message is consistent with the calling party address carried in the MT message or not and whether the calling party address carried in the MT message is consistent with the calling party address carried in the SRI message or not. If at least one of the two situations is inconsistent, the MT message is a fake message.

The calling party address in the SRI message is usually a real address. If the MT message is a message forged by a forger, the calling party address thereof is usually forged, and meanwhile, the SM-RP-OA carried in the MT message is usually forged as well. Therefore, the calling party address in the SRI message and the calling party address carried in the MT message may be compared during the checking process, so as to determine whether the MT message is a fake message or not.

The method for message identification provided in this embodiment is mainly directed to identifying the situation of faking the message. Through checking an MT message by a signalling check point, an accurate identification of the faking situation is realized, thereby enhancing the security and reliability of network operation.

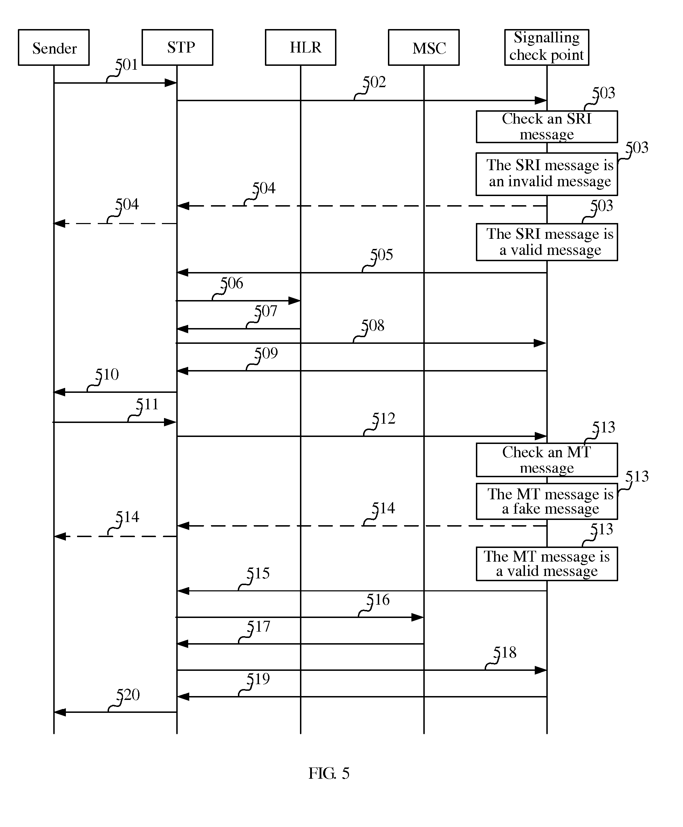

FIG. 5 is a signalling flow chart of a method for message identification according to an embodiment of the present invention. As shown in FIG. 5, based on the networking logic structure shown in FIG. 1, the flows of checking and sending the MT message are described in this embodiment in detail by taking a situation that a sender 101 pretends to be an SMSC in the external network to send an MT message as an example. The method for message identification includes the following steps.

In Step 501, the sender 101 sends an SRI message to an STP 102.

The sender 101 sends an SRI message adapted to query a VMSC address of a subscriber corresponding to a called identifier to the STP 102. The SRI message carries the called identifier, a calling party address, and an SMSC address. The calling party address is usually a real address of the sender 101, such that the sender 101 is able to receive the queried VMSC address of the subscriber corresponding to the called identifier. The queried VMSC may be an MSC of a home location for a local network subscriber identified by the called identifier or an MSC of a visitor location for the local network subscriber.

In Step 502, after receiving the SRI message sent from the SMSC in the external network, the STP 102 routes the SRI message to a signalling check point 103 according to an opcode routing rule of an MAP layer.

In Step 503, after receiving the SRI message forwarded by the STP 102, the signalling check point 103 stores the calling party address carried in the SRI message, and determines whether the SMSC address carried in the SRI message is consistent with the calling party address carried in the SRI message or not, so as to check the SRI message, in which if not, the SRI message is identified as an invalid message, and Step 504 is performed; otherwise, the SRI message is identified as a valid message, and Step 505 is performed.

In Step 504, the signalling check point 103 forwards a failure response message to the sender 101 through the STP 102, so as to inform the sender 101 that the SRI message sent by the sender 101 fails, and the process is ended.

In Steps 505-506, the signalling check point 103 modifies the calling party address carried in the SRI message into an address of the signalling check point 103, and the SRI message with the modified address is sent to an HLR 104 by the STP 102.

In Step 505, the modification of the calling party address carried in the SRI message into the address of the signalling check point 103 aims at enabling an SRI response message returned by the HLR 104 to be sent to the signalling check point 103.

In Steps 507-508, the HLR 104 queries a VMSC address of a called subscriber corresponding to the called identifier according to the called identifier carried in the received SRI message, carries the VMSC address in the SRI response message, and sends the SRI response message to the signalling check point 103 through the STP 102. At this time, the called party address in the SRI response message is the address of the signalling check point 103.

In Steps 509-510, after receiving the SRI response message forwarded by the STP 102, the signalling check point 103 stores the VMSC address of the called subscriber corresponding to the called identifier carried in the SRI response message, and may further store an international mobile subscriber identification number (IMSI) carried in the SRI response message. The signalling check point 103 modifies the VMSC address of the called subscriber corresponding to the called identifier carried in the SRI response message into an address of the signalling check point 103, so as to ensure that the VMSC address of the called subscriber learned by the sender 101 is the address of the signalling check point 103, such that the sender 101 sends the MT message to the signalling check point 103. Meanwhile, the signalling check point 103 may further modify the IMSI carried in the SRI response message into a uniquely identified string generated in the signalling check point 103. Then, the SRI response message with the modified VMSC address and the modified IMSI identifier is sent to the sender 101 through the STP 102, so as to inform the sender 101 that the SRI message sent by the sender 101 is a valid message and it may resume sending MT messages.

In Steps 511-512, the sender 101 sends the MT message to the signalling check point 103 through the STP 102.

The MT message carries a calling identifier, a called identifier, a calling party address, a called party address, and the modified IMSI identifier carried in the received SRI response message. The called party address is the VMSC address of the called subscriber obtained by the sender 101 from the received SRI response message. In the embodiment of the present invention, the called party address is an address of the signalling check point 103 modified by the signalling check point 103 itself. The calling party address is usually forged, which may be an address of a certain SMSC in an external network, and the actual sender 101 may be located in a third party network or a non-mobile network.

In Step 513, after receiving the MT message forwarded by the STP 102, the signalling check point 103 determines whether an SM-RP-OA carried in the MT message is consistent with the calling party address carried in the MT message or not and whether the calling party address carried in the MT message is consistent with the calling party address in the SRI message or not, so as to check the MT message. If at least one of the two situations is inconsistent, it indicates that the sender 101 is a forger, and the calling party address carried in the MT message is forged. Thus, the MT message is identified as a fake message, and Step 514 is performed. If the SM-RP-OA carried in the MT message is consistent with the calling party address carried in the MT message, and the calling party address carried in the MT message is consistent with the calling party address carried in the SRI message, it indicates that the sender 101 is a real SMSC, and the calling party address carried in the MT message is an address of an SCCP layer of the SMSC. Thus, the MT message is identified as a valid message, and Step 515 is performed.

In Step 513 of this embodiment, after receiving the MT message forwarded by the STP 102, the signalling check point 103 obtains the calling party address in the SRI message stored in the signalling check point 103 by using the modified IMSI identifier carried in the MT message, and then determines whether the SM-RP-OA carried in the MT message is consistent with the calling party address carried in the MT message or not and whether the calling party address carried in the MT message is consistent with the calling party address in the SRI message or not, so as to check the MT message.

In Step 514, the signalling check point 103 forwards a failure response message to the sender 101 through the STP 102, so as to inform the sender 101 that the MT message sent by the sender 101 fails, and the process is ended.

In Steps 515-516, the signalling check point 103 modifies the calling party address in the MT message into an address of the signalling check point 103, modifies the called party address into the VMSC address of the called subscriber corresponding to the called identifier stored in Step 509, and then sends the MT message with the modified address to the VMSC, for example, the MSC 105 as shown in FIG. 1, through the STP 102.

In Step 515, the modification of the calling party address in the MT message into the address of the signalling check point 103 aims at ensuring that the MSC 105 returns an MT message response to the signalling check point 103.

In Steps 517-518, after receiving the MT message forwarded by the STP 102, the MSC 105 sends the MT message response to the signalling check point 103 through the STP 102.

In Steps 519-520, after receiving the MT message response forwarded by the STP 102, the signalling check point 103 modifies the called party address in the MT message response from the address of the signalling check point 103 into the address of the SMSC, and sends the MT message response with the modified address to the SMSC through the STP 102, so as to inform the SMSC that the MT message sent by the SMSC is a valid message, which may be processed according to a normal short message processing procedure.

The method for message identification provided in this embodiment is mainly directed to identifying the situation of faking the messages. Through checking an MT message and modifying a calling party address and/or a called party address of the message by a signalling check point, an accurate identification of the faking situation is realized, so as to enhance the security and reliability of network operation.

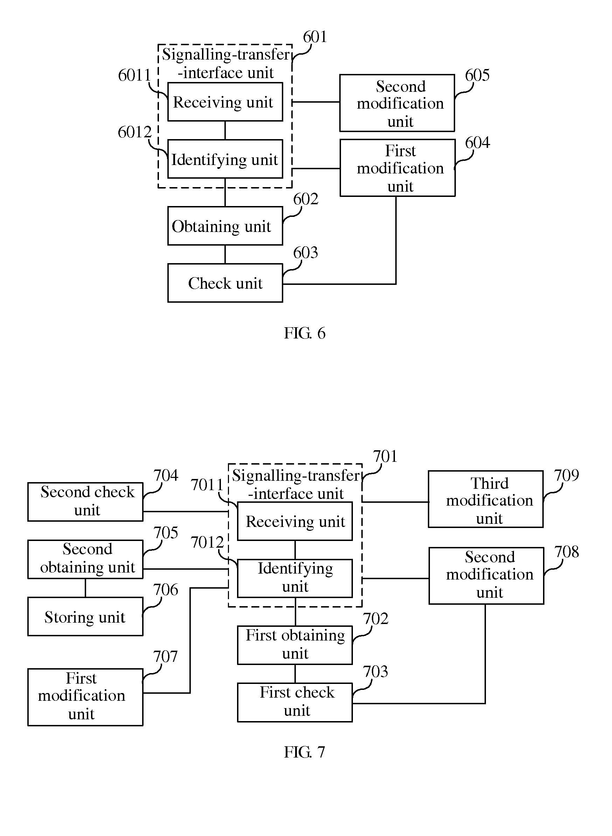

FIG. 6 is a schematic structural view of a device for message identification according to an embodiment of the present invention. As shown in FIG. 6, this embodiment is directed to a spoofing situation of an MO message. The device for message identification includes a signalling-transfer-interface unit 601, an obtaining unit 602, and a check unit 603. The signalling-transfer-interface unit 601 receives an MO message. The MO message carries a calling identifier and a calling party address. The obtaining unit 602 obtains a VMSC address of a subscriber corresponding to the calling identifier. The check unit 603 determines whether the calling party address is consistent with the obtained VMSC address or not, and if not, the MO message is a spoof message.

In the device for message identification, the signalling-transfer-interface unit 601 further includes a receiving unit 6011 adapted to receive messages routed by an STP according to a destination address routing rule, and an identifying unit 6012 adapted to identify an MO message from the messages. The destination address routing rule is a rule for routing messages with a called party address as a to network equipment with an address of b. In the embodiment of the present invention, the MO message with a called party address being an SMSC is routed to a signalling check point.

The device for message identification may further include a first modification unit 604 and a second modification unit 605. When the check unit 603 determines that the calling party address is consistent with the obtained VMSC address, the first modification unit 604 modifies the calling party address in the MO message into an address of the signalling check point, that is, the device for message identification. Then, the signalling-transfer-interface unit 601 sends the MO message to a corresponding SMSC according to the called party address in the MO message, and receives an MO message response returned by the SMSC. The second modification unit 605 modifies a called party address in the MO message response into the VMSC address. Then, the signalling-transfer-interface unit 601 sends the MO message response with the modified called party address to the VMSC.

It should be noted that, the specific method for identifying the MO message by the device for message identification can be obtained with reference to the above descriptions about the embodiment of the method for message identification, which is not repeatedly described here.

The device for message identification provided in this embodiment is mainly directed to identifying a spoofing situation of messages. Through checking an MO message and modifying a calling party address or a called party address of the message by the device for message identification, that is, the signalling check point in the embodiment of the present invention, an accurate identification of the spoofing situation is realized, thereby enhancing the security and reliability of network operation.

FIG. 7 is a schematic structural view of a device for message identification according to an embodiment of the present invention. As shown in FIG. 7, the embodiment is directed to a situation of faking an MT message. The device for message identification includes a signalling-transfer-interface unit 701, a first obtaining unit 702, and a first check unit 703. The signalling-transfer-interface unit 701 receives an MT message. The MT message carries a called identifier, a calling party address, and an SM-RP-OA. The first obtaining unit 702 obtains a calling party address carried in an SRI message associated with the MT message from the SRI message according to the called identifier. The first check unit 703 determines whether the SM-RP-OA carried in the MT message is consistent with the calling party address carried in the MT message or not and whether the calling party address carried in the MT message is consistent with the calling party address carried in the SRI message or not, and if at least one of the two situations is inconsistent, the MT message is a fake message.

The device for message identification may further include a second check unit 704, a second obtaining unit 705, a storing unit 706, and a first modification unit 707. After the signalling-transfer-interface unit 701 has received the SRI message, the second check unit 704 determines whether the calling party address carried in the SRI message is consistent with an SMSC address or not. The SRI message carries a called identifier, the calling party address, and the SMSC address. Then, when the calling party address carried in the SRI message is consistent with the SMSC address, the signalling-transfer-interface unit 701 sends the SRI message to an HLR, and receives an SRI response message returned from the HLR. The second obtaining unit 705 obtains a VMSC address of a subscriber corresponding to the called identifier carried in the SRI response message. The storing unit 706 stores the VMSC address of the subscriber corresponding to the called identifier. The first modification unit 707 modifies the VMSC address of the subscriber corresponding to the called identifier carried in the SRI response message into an address of a signalling check point, that is, the device for message identification. Subsequently, the signalling-transfer-interface unit 701 sends the SRI response message with the modified address to the SMSC corresponding to the calling party address carried in the SRI message.

The signalling-transfer-interface unit 701 in the device for message identification may further include a receiving unit 7011 adapted to receive messages routed by an STP according to an MAP opcode routing rule, and an identifying unit 7012 adapted to identify an SRI message from the messages.

The device for message identification may further include a second modification unit 708 and a third modification unit 709. When the first check unit 703 determines that the SM-RP-OA carried in the MT message is consistent with the calling party address carried in the MT message and the calling party address carried in the MT message is consistent with the calling party address carried in the SRI message, the second modification unit 708 modifies the called party address in the MT message into the stored VMSC address of the subscriber corresponding to the called identifier, and modifies the calling party address in the MT message into an address of the signalling check point, that is, the device for message identification. Then, the signalling-transfer-interface unit 701 sends the MT message to a corresponding VMSC according to the called party address carried in the MT message with the modified address, and receives an MT message response returned by the VMSC. The third modification unit 709 modifies a called party address carried in the MT message response into an address of an SCCP layer of the SMSC. Subsequently, the signalling-transfer-interface unit 701 sends the MT message response to an SMSC corresponding to the address of the SCCP layer of the SMSC.

It should be noted that, the specific method for identifying an MT message by the device for message identification can be obtained with reference to the above descriptions about the embodiment of the method for message identification, which is not repeatedly described here. Additionally, the devices for message identification shown in FIG. 6 and FIG. 7 may be integrated into one network equipment.
The device for message identification provided in this embodiment is mainly directed to identifying the situation of faking messages. Through checking an MT message and modifying a calling party address and/or a called party address of the message by a signalling check point, an accurate identification of the faking situation is realized, thereby enhancing the security and reliability of network operation.

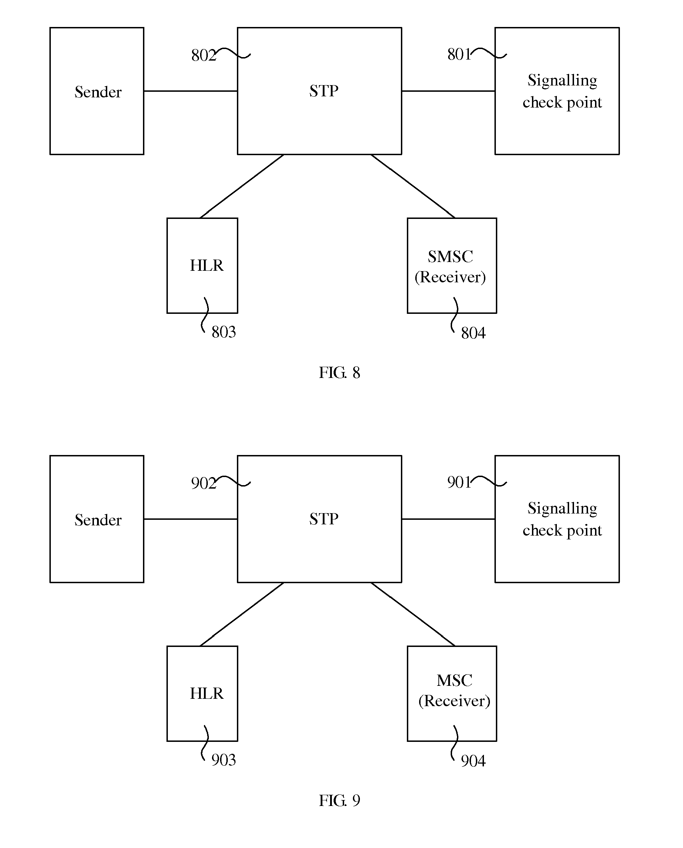

FIG. 8 is a schematic structural view of a system for message identification according to an embodiment of the present invention. As shown in FIG. 8, this embodiment is directed to the spoofing situation of an MO message. The device for message identification includes a signalling check point 801 and an STP 802. The signalling check point 801 receives an MO message carrying a calling identifier and a calling party address, obtains a VMSC address of a subscriber corresponding to the calling identifier, and determines whether the calling party address is consistent with the obtained VMSC address or not, and if not, the MO message is a spoof message. The STP 802 connected to the signalling check point 801 routes the MO message to the signalling check point 801 according to a destination address routing rule, and forwards a message to be processed by the signalling check point 801.

The system for message identification in this embodiment may further include an HLR 803 and an SMSC 804. The HLR 803 receives an SRI message sent by the signalling check point 801 through the STP 802 to query the VMSC address of the subscriber corresponding to the calling identifier, and returns an SRI response message to the signalling check point 801 through the STP 802. The SRI response message carries the VMSC address of the subscriber corresponding to the calling identifier. The SMSC 804 receives the MO message sent by the signalling check point 801 from the STP 802, and returns an MO message response to the signalling check point 801 through the STP 802, when the calling party address carried in the MO message is consistent with the obtained VMSC address.

It should be noted that, the signalling check point 801 in the system for message identification may further include units such as those in the device for message identification described above, and the specific method thereof for identifying an MO message can be obtained with reference to the above descriptions about the embodiment of the method for message identification, which is not repeatedly described here.

The system for message identification provided in this embodiment is mainly directed to identifying the spoofing situation of messages. Through checking an MO message and modifying a calling party address or a called party address of the message by a signalling check point, an accurate identification of the spoofing situation is realized, thereby enhancing the security and reliability of network operation.

FIG. 9 is a schematic structural view of a system for message identification according to an embodiment of the present invention. As shown in FIG. 9, this embodiment is directed to the situation of faking an MT message. The system for message identification includes a signalling check point 901 and an STP 902. The signalling check point receives an MT message carrying a called identifier, a calling party address, and an SM-RP-OA, obtains a calling party address carried in an SRI message associated with the MT message from the SRI message according to the called identifier, and determines whether the SM-RP-OA carried in the MT message is consistent with the calling party address carried in the MT message or not and whether the calling party address carried in the MT message is consistent with the calling party address carried in the SRI message or not, and if at least one of the two situations is inconsistent, the MT message is a fake message. The STP 902 connected to the signalling check point 901 routes the MT message to the signalling check point 901 according to an MAP opcode routing rule, and forwards a message to be processed by the signalling check point 901. The signalling check point 901 is further adapted to check whether the calling party address carried in the SRI message is consistent with an address of an SMSC or not.

The system for message identification in this embodiment may further include an HLR 903 and an MSC 904. The HLR 903 receives the SRI message sent by the signalling check point 901 through the STP 902 to query a VMSC address of a subscriber corresponding to the called identifier, and returns an SRI response message to the signalling check point 901 through the STP 902. The SRI response message carries the VMSC address of the subscriber corresponding to the called identifier. The MSC 904 receives the MT message sent by the signalling check point 901 from the STP 902, and returns an MT message response to the signalling check point 901 through the STP 902, when the SM-RP-OA carried in the MT message is consistent with the calling party address carried in the MT message and the calling party address carried in the MT message is consistent with the calling party address carried in the SRI message.

It should be noted that, the signalling check point 901 in the system for message identification may include units such as those in the above device for message identification, and the specific method thereof for identifying an MT message can be obtained with reference to the above descriptions about the embodiment of the method for message identification, which is not repeatedly described here.

The system for message identification provided in this embodiment is mainly directed to identifying the situation of faking messages. Through checking an MT message and modifying a calling party address or a called party address of the message by a signalling check point, an accurate identification of the faking situation is realized, thereby increasing the security coefficient for network operation.

Those of ordinary skill in the art may appreciate that, all or a part of the steps for realizing the method in the embodiments may be accomplished by the relevant hardware instructed by a computer program, and the computer program may be stored in a computer-readable storage medium. When the program is executed, the steps of the method in the embodiments are performed. The storage medium includes a magnetic disk, an optical disk, a read only memory (ROM), or a random access memory (RAM) and the like.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A method for message identification, comprising:
receiving a mobile originated (MO) message, wherein the MO message carries a calling identifier and a calling party address;
obtaining a visited mobile switching center (VMSC) address of a subscriber corresponding to the calling identifier; and
determining whether the calling party address is consistent with the obtained VMSC address or not, wherein if the calling party address is not consistent with the obtained VMSC address, the MO message is a spoof message.

2. The method for message identification according to claim 1, wherein the receiving the MO message comprises:
receiving the MO message routed by a signalling transfer point (STP) according to a destination address routing rule.

3. The method for message identification according to claim 2, wherein the obtaining the VMSC address of the subscriber corresponding to the calling identifier comprises:
sending a SendRoutingInfoForSM (SRI) message to a home location register (HLR) to query the VMSC address of the subscriber corresponding to the calling identifier according to the MO message; and
receiving an SRI response message returned by the HLR, and obtaining the VMSC address of the subscriber corresponding to the calling identifier carried in the SRI response message.

4. The method for message identification according to claim 2 or 3, further comprising:
modifying the calling party address carried in the MO message into an address of a signalling check point when the calling party address is consistent with the obtained VMSC address, and sending the MO message to a corresponding short message service center (SMSC) according to a called party address carried in the MO message; and
receiving an MO message response returned by the SMSC, modifying a called party address carried in the MO message response into the VMSC address, and sending the MO message response to the VMSC.

5. A device for message identification, comprising:
a signalling-transfer-interface unit, adapted to receive a mobile originated (MO) message, wherein the MO message carries a calling identifier and a calling party address;
an obtaining unit, adapted to obtain a visited mobile switching center (VMSC) address of a subscriber corresponding to the calling identifier; and
a check unit, adapted to determine whether the calling party address is consistent with the obtained VMSC address or not, wherein if the calling party address is not consistent with the obtained VMSC address, the MO message is a spoof message.

6. The device for message identification according to claim 5, wherein the signalling-transfer-interface unit comprises:
a receiving unit, adapted to receive messages routed by a signalling transfer point (STP) according to a destination address routing rule; and
an identifying unit, adapted to identify the MO message from the messages.

7. The device for message identification according to claim 6, further comprising: a first modification unit and a second modification unit; wherein
the first modification unit is adapted to modify the calling party address carried in the MO message into an address of a signalling check point when the check unit determines that the calling party address is consistent with the obtained VMSC address;
the signalling-transfer-interface unit is further adapted to send the MO message with the modified calling party address to a corresponding short message service center (SMSC) according to a called party address of the MO message, and receive an MO message response returned by the SMSC;
the second modification unit is adapted to modify a called party address of the MO message response into the VMSC address; and
the signalling-transfer-interface unit is further adapted to send the MO message response with the modified called party address to the VMSC.

8. A system for message identification, comprising:
a signalling check point, adapted to receive a mobile originated (MO) message carrying a calling identifier and a calling party address, obtain a visited mobile switching center (VMSC) address of a subscriber corresponding to the calling identifier, and determine whether the calling party address is consistent with the obtained VMSC address or not, wherein if the calling party address is not consistent with the obtained VMSC address, the MO message is a spoof message; and
a signalling transfer point (STP), connected to the signalling check point, and adapted to route the MO message to the signalling check point, and forward a message to be processed by the signalling check point.

9. The system for message identification according to claim 8, further comprising:
a home location register (HLR), adapted to receive a SendRoutingInfoForSM (SRI) message sent by the signalling check point through the STP to query the VMSC address of the subscriber corresponding to the calling identifier, and return an SRI response message to the signalling check point through the STP, wherein the SRI response message carries the VMSC address of the subscriber corresponding to the calling identifier; and
a short message service center (SMSC), adapted to receive the MO message sent by the signalling check point from the STP when the calling party address carried in the MO message is consistent with the obtained VMSC address, and return an MO message response to the signalling check point through the STP.

10. A method for message identification, comprising:
receiving a mobile terminated (MT) message, wherein the MT message carries a called identifier, a calling party address, and a short message relay protocol origination address (SM-RP-OA);
obtaining a calling party address carried in a SendRoutingInfoForSM (SRI) message from the SRI message associated with the MT message according to the called identifier; and
determining whether the SM-RP-OA carried in the MT message is consistent with the calling party address carried in the MT message or not and whether the calling party address carried in the MT message is consistent with the calling party address carried in the SRI message or not, wherein if at least one of the two situations is inconsistent, the MT message is a fake message.

11. The method for message identification according to claim 10, wherein before receiving the MT message, the method further comprises:
receiving the SRI message, wherein the SRI message carries a called identifier, a calling party address, and a short message service center (SMSC) address;
determining whether the calling party address carried in the SRI message is consistent with the SMSC address or not, and if the calling party address carried in the SRI message is consistent with the SMSC address, sending the SRI message to a home location register (HLR), and receiving an SRI response message returned from the HLR;
obtaining and storing a visited mobile switching center (VMSC) address of a subscriber corresponding to a called identifier carried in the SRI response message; and
modifying the VMSC address of the subscriber corresponding to the called identifier carried in the SRI response message into an address of a signalling check point, and sending the SRI response message to the SMSC.

12. The method for message identification according to claim 11, wherein the receiving the SRI message comprises:
receiving the SRI message routed by a signalling transfer point (STP) according to a mobile application part (MAP) opcode routing rule.

13. The method for message identification according to claim 11 or 12, further comprising:
modifying the called party address carried in the MT message into the stored VMSC address of the subscriber corresponding to the called identifier and modifying the calling party address carried in the MT message into the address of the signalling check point when the SM-RP-OA in the MT message is consistent with the calling party address in the MT message and the calling party address in the MT message is consistent with the calling party address in the SRI message, and sending the MT message to the corresponding VMSC according to the modified called party address; and
receiving an MT message response returned by the VMSC, modifying a called party address carried in the MT message response into the address of the SMSC, and sending the MT message response to the SMSC corresponding to the SMSC address.

14. A device for message identification, comprising:
a signalling-transfer-interface unit, adapted to receive a mobile terminated (MT) message, wherein the MT message carries a called identifier, a calling party address, and a short message relay protocol origination address (SM-RP-OA);
a first obtaining unit, adapted to obtain a calling party address carried in a SendRoutingInfoForSM (SRI) message from the SRI message associated with the MT message according to the called identifier; and
a first check unit, adapted to determine whether the SM-RP-OA carried in the MT message is consistent with the calling party address carried in the MT message or not and whether the calling party address carried in the MT message is consistent with the calling party address carried in the SRI message or not, wherein if at least one of the two situations is inconsistent, the MT message is a fake message.

15. The device for message identification according to claim 14, further comprising: a second check unit, a second obtaining unit, a storing unit, and a first modification unit; wherein
the signalling-transfer-interface unit is further adapted to receive the SRI message, and the SRI message carries the called identifier, the calling party address, and a short message service center (SMSC) address;
the second check unit is adapted to determine whether the calling party address carried in the SRI message is consistent with the SMSC address or not;
the signalling-transfer-interface unit is further adapted to send the SRI message to a home location register (HLR) when the calling party address carried in the SRI message is consistent with the address of the SMSC, and receive an SRI response message returned from the HLR;
the second obtaining unit is adapted to obtain a visited mobile switching center (VMSC) address of a subscriber corresponding to the called identifier carried in the SRI response message;
the storing unit is adapted to store the VMSC address of the subscriber corresponding to the called identifier;
the first modification unit is adapted to modify the VMSC address of the subscriber corresponding to the called identifier carried in the SRI response message into an address of a signalling check point; and
the signalling-transfer-interface unit is further adapted to send the SRI response message with the modified address to the SMSC corresponding to the calling party address carried in the SRI message.

16. The device for message identification according to claim 15, wherein the signalling-transfer-interface unit comprises:
a receiving unit, adapted to receive messages routed by a signalling transfer point (STP) according to a mobile application part (MAP) opcode routing rule; and
an identifying unit, adapted to identify the SRI message from the messages.

17. The device for message identification according to claim 15 or 16, further comprising: a second modification unit and a third modification unit; wherein
the second modification unit is adapted to modify the called party address carried in the MT message into the stored VMSC address of the subscriber corresponding to the called identifier and modify the calling party address carried in the MT message into the address of the signalling check point when the second check unit determines that the SM-RP-OA in the MT message is consistent with the calling party address in the MT message and the calling party address in the MT message is consistent with the calling party address in the SRI message;
the signalling-transfer-interface unit is further adapted to send the MT message to the corresponding VMSC according to the called party address carried in the MT message with the modified address, and receive an MT message response returned by the VMSC;
the third modification unit is adapted to modify the called party address carried in the MT message response into the SMSC address; and
the signalling-transfer-interface unit is further adapted to send the MT message response to an SMSC corresponding to the SMSC address.

18. A system for message identification, comprising:
a signalling check point, adapted to receive a mobile terminated (MT) message carrying a called identifier, a calling party address, and a short message relay protocol origination address (SM-RP-OA), obtain a calling party address carried in a SendRoutingInfoForSM (SRI) message from the SRI message associated with the MT message according to the called identifier, and determine whether the SM-RP-OA carried in the MT message is consistent with the calling party address carried in the MT message or not and whether the calling party address carried in the MT message is consistent with the calling party address carried in the SRI message or not, wherein if at least one of the two situations is inconsistent, the MT message is a fake message; and
a signalling transfer point (STP), connected to the signalling check point, adapted to route the MT message to the signalling check point, and forward a message to be processed by the signalling check point.

19. The system for message identification according to claim 18, wherein the signalling check point is further adapted to check whether the calling party address carried in the SRI message is consistent with a short message service center (SMSC) address or not.

20. The system for message identification according to claim 18 or 19, further comprising:
a home location register (HLR), adapted to receive an SRI message sent by the signalling check point through the STP to query a visited mobile switching center (VMSC) address of a subscriber corresponding to the called identifier, and return an SRI response message to the signalling check point through the STP, wherein the SRI response message carries the VMSC address of the subscriber corresponding to the called identifier; and
a mobile switching center (MSC), adapted to receive the MT message sent by the signalling check point from the STP when the SM-RP-OA in the MT message is consistent with the calling party address in the MT message and the calling party address in the MT message is consistent with the calling party address in the SRI message, and return an MT message response to the signalling check point through the STP.
